# EUROPÄISCHE PATENTSCHRIFT

(11) **EP 2 588 998 B1**
(45) Veröffentlichungstag und Bekanntmachung des Hinweises auf die Patenterteilung: **16.04.2014**
(21) Anmeldenummer: 11727120.5
(22) Anmeldetag: 16.06.2011
(51) Int. Cl.: G06K 19/077

(54) **VERFAHREN ZUR HERSTELLUNG EINES DATENTRÄGERKÖRPERS FÜR EINEN TRAGBAREN DATENTRÄGER UND DATENTRÄGERKÖRPER**
METHOD FOR PRODUCING A DATA STORAGE MEDIUM BODY FOR A PORTABLE DATA STORAGE MEDIUM, AND DATA STORAGE MEDIUM BODY
PROCÉDÉ DE FABRICATION D'UN CORPS DE SUPPORT DE DONNÉES POUR UN SUPPORT DE DONNÉES PORTATIF ET CORPS DE SUPPORT DE DONNÉES

(30) Priorität: 01.07.2010 DE 102010025774
(43) Veröffentlichungstag der Anmeldung: 08.05.2013
(73) Patentinhaber: Giesecke & Devrient GmbH, 81677 München (DE)
(72) Erfinder: TARANTINO, Thomas, 83410 Laufen (DE); PONIKWAR, Walter, 81739 München (DE); SALZER, Tobias, 82008 Unterhaching (DE); ENDRES, Günter, 81547 München (DE); SCHELLENBERGER, Cristina, 85748 Garching (DE)
(86) Internationale Anmeldenummer: PCT/EP2011/002984
(87) Internationale Veröffentlichungsnummer: WO 2012/000615

(56) Entgegenhaltungen:
- WO-A1-2007/089140
- WO-A2-03/056499
- HAGHIRI YAHYA ET AL: "Vom Plastik zur Chipkarte; 7.2 Kontaktlose Chipkarte", VOM PLASTIK ZUR CHIPKARTE: WEGWEISER ZUM AUFBAU UND ZURHERSTELLUNG VON CHIPKARTEN, XX, XX, 1. Januar 1999 (1999-01-01), Seiten 181-192, XP002364832,

## Beschreibung

Die Erfindung betrifft ein Verfahren und einen Gegenstand nach der Gattung der unabhängigen Ansprüche. Insbesondere betrifft die Erfindung ein Verfahren zur Herstellung eines berührungslos auslesbaren Identifikationsdokumentes mit integriertem IC, das als Ausweis oder als Datenseite in einem Passbuch nutzbar ist, sowie ein entsprechendes Identifikationsdokument.

Identifikationsdokumente wie Ausweise oder Pässe werden zunehmend mit Transponderanordnungen versehen, die aus einem Chipmodul, das einen IC enthält, und einer damit verbundenen Antenne bestehen. Diese Chip-Spulen-Anordnungen erlauben es, in dem IC gespeicherte Daten berührungslos auszulesen. Die Herstellung solcher Identifikationsdokumente erfolgt typischerweise durch Laminieren von zumindest einer Kern- und zwei Deckschichten, wobei in die Kernschicht die Chip-Spulen-Anordnung integriert wird. Ein Problem in Bezug auf die Dauerbeständigkeit solcher Identifikationsdokumente bildet der Verbund zwischen dem IC-Modul und dem Dokumentenkörper. Beide bestehen aus unterschiedlichen Materialien, wobei das Modulmaterial hart und hochschmelzend ist, während das für den Dokumentenkörper verwendete Material vergleichsweise weich und gut laminierbar ist. Die unterschiedliche Materialbeschaffenheit von IC-Modul und Dokumentenkörper führt bei langfristiger Nutzung eines entsprechenden Identifikationsdokuments bisweilen dazu, dass sich ausgehend von dem Grenzbereich zwischen Chipmodul und Dokumentenkörper in den angrenzenden Schichten Risse bilden. Die Risse pflanzen sich in die nächstliegende Deckschicht fort und beeinträchtigen Erscheinungsbild und mechanische Stabilität des Identifikationsdokumentes.

Um solche Risse in als Identifikationsdokument genutzten tragbaren Datenträgem zu verhindern wurde in der WO 2007/089140 A1 vorgeschlagen, zwischen Moduloberseite und Deckschicht eine weitere Schicht vorzusehen und zwischen der weiteren Schicht und der Deckschicht eine nicht durchgehende Hilfsschichteinlage vorzusehen, die etwas größer ist als die Moduloberseite und aus einem gummiartigen Material mit einem besonders großen Dehnungskoeffizient besteht. Die Hilfsschichteinlage verhindert, dass ggf. vom Übergangsbereich zwischen Modul und Kernschicht ausgehende Risse sich jedenfalls nicht in die Deckschicht fortpflanzen. Eine analoge Hilfsschichteinlage kann auch für die schmalere Unterseite des Moduls vorgesehen sein.

Aus der WO 2009/135823 A1 ist ebenfalls zu dem Zweck, das Entstehen von Rissen zu unterbinden, ein Aufbau für einen mehrschichtigen Körper eines Identifikationsdokumentes entnehmbar, bei dem einzelne Schichten Einlagen aus einem weicheren Material enthalten. Ein in den Dokumentenkörper zu integrierendes Chipmodul wird nun genau in einem solchen Flicken von weicherem Material angeordnet. Die Ausdehnung des Flickens ist dabei größer als das Modul. Beim Laminieren fließt dann das weichere Material vollständig um das Modul herum und bettet es formschlüssig ein. Auf diese Weise können Stresszonen, die zu Rissen führen vermieden werden. Die Realisierung der patchworkartigen Schichten ist jedoch aufwendig.

Aus der DE 199 21 230 A1 ist ein Verfahren zum Herstellen einer Chipkarte unter direkter Verwendung eines gedünnten Chips anstelle eines sonst üblichen Chipmoduls bekannt. Der Chip wird in einem Wafer hergestellt und an der Baulelementeseite unter Zwischenlage eines lösbaren Interims-Klebers auf einem Trägerband plaziert, wo er von der Rückseite her gedünnt wird. Nach Entfernen des Interims-Klebers wird der gedünnte Chip in eine in einem Chipkartenkörper vorbereitete Kavität gesetzt. Dabei wird er mit Hilfe eines zu diesem Zweck auf die Chiprückseite aufgebrachten weiteren Klebers in der Kavität fixiert. Auf die Bauelementeseite wird anschließend eine Chipkartenfolie auflaminiert, auf der Leiterbahnen ausgebildet sind, welche die Bauelementeseite des gedünnten Chips kontaktieren. Das Problem einer möglichen Rißbildung stellt sich bei Verwendung zumal gedünnter Chips nicht, weil diese im fertigen Kartenkörper mit ihrer minimalen Dicke und ihrer geringen Fläche nur einen sehr kleinen Bauraum einnehmen, von dem keine rißbildenden Störungen ausgehen. Die Handhabung der Chips ist im Vergleich zur Handhabung von Chipmodulen allerdings sehr aufwendig.

In dem Buch "Vom Plastik zur Chipkarte" von Y. Haghiri, T. Tarantino, Carl Hanser Verlag München, 1999, werden Herstellungsverfahren für Chipkarten, insbesondere die Laminiertechnik, beschrieben.

Aufgabe der Erfindung ist es ein Verfahren anzugeben, das es ohne wesentliche Eingriffe in den Laminierprozess erlaubt rissfeste Datenträger herzustellen.

Diese Aufgabe wird gelöst durch ein Verfahren mit den Merkmalen des Anspruchs 1 sowie durch einen Datenträgerkörper für einen tragbaren Datenträger mit den Merkmalen des Anspruchs 9.

Das erfindungsgemäße Verfahren hat den Vorteil, dass lediglich bei der Vorbereitung der Chipmodule für den Einbau in einen Datenträgerkörper Änderungen im Verfahrensablauf vorgenommen werden müssen, während der nachfolgende Laminierprozess selbst auf dieselbe Weise ausgeführt werden kann, wie beim Laminieren üblicher Datenträger, die nicht besonders auf Rissfestigkeit ausgelegt sind.

Das erfindungsgemäße Verfahren hat weiter den Vorteil, dass es eine wirksame Integration von Modulen in Datenträgerkörper erlaubt, die eigentlich laminierunfreundliche Oberflächen aufweisen. Unter anderem wird es möglich Modulen mit metallischen Oberseiten oder Module mit antihaftend ausgeführten Oberflächen in einen Datenträgerkörper so zu integrieren, daß das Chipmodul und alle Schichten einen durchgehenden starken Verbund bilden.

In einer vorteilhaften Ausführung des erfindungsgemäßen Verfahren werden die Chipmodule vor dem Laminieren mit einer passergenau auf ihre Oberfläche abgestimmten Einlage eines Klebers versehen, der beim Laminieren eine innige Verbindung sowohl zu der angrenzenden durchgehenden Schicht wie zu der laminierunfreundlichen Oberfläche des Chipmoduls eingeht. Bei dem Kleber handelt es vorzugsweise um einen sogenannten Hotmelt-Kleber.

Vorteilhaft wird der Kleber zur Erzeugung der Klebereinlage in einem zweischichtigen Kleberband bereitgestellt, das aus einer lösbaren Handhabungsschicht und der eigentlichen Kleberschicht besteht. Die Handhabungsschicht wird nach Aufbringen des Kleberbandes auf das Chipmodul wieder entfernt. Auf diese Weise kann das Kleberband vorteilhaft in Rollenform bereitgestellt und davon verarbeitet werden.

In vorteilhafter Ausführung befinden sich die Chipmodule zunächst in einem Modulträgerband und werden ebenfalls in Rollenform bereitgestellt. Die Zusammenführung von Kleberband und Modulträgerband kann damit besonders effizient realisiert werden.

In besonders vorteilhafter Nutzung eignet sich das erfindungsgemäße Verfahren zur Herstellung eines berührungslos auslesbaren Identifikationsdokumentes mit integriertem IC, das als Ausweis oder als Datenseite in einem Passbuch nutzbar ist.

Nachfolgend wird ein Ausführungsbeispiel der Erfindung unter Bezugnahme auf die Zeichnung näher erläutert.

Es zeigen:
- Fig. 1: im Querschnitt die Zusammenführung eines Modulträgerbandes und eines Kleberbandes,
- Fig. 2: im Querschnitt ein Modulträgerband nach dem Verbinden mit dem Kleberband beim Ablösen der Handhabungsschicht,
- Fig. 3: im Querschnitt ein Modulträgerband mit aufgebrachter Kleberschicht vor dem Vereinzeln mittels eines Stanzwerkzeuges,
- Fig. 4: ein vereinzeltes, mit einer Klebereinlage versehenes Chipmodul beim Aufdosieren eines Haftklebers auf die Modulrückseite,
- Fig. 5: im Querschnitt einen Schichtenstapel von zu laminierenden Schichten zur Herstellung eines Datenträgerkörpers zusammen mit einem mit Klebereinlage und Haftkleber versehenen Chipmodul beim Einsetzen des Chipmoduls in die Ausnehmung,
- Fig. 6: im Querschnitt eine Anordnung von zu laminierenden Schichten zur Herstellung eines tragbaren Datenträgers mit eingesetztem Chipmodul vor dem Laminieren, und
- Fig. 7: im Querschnitt einen tragbaren Datenträger aus Kunststoff nach dem Laminieren.

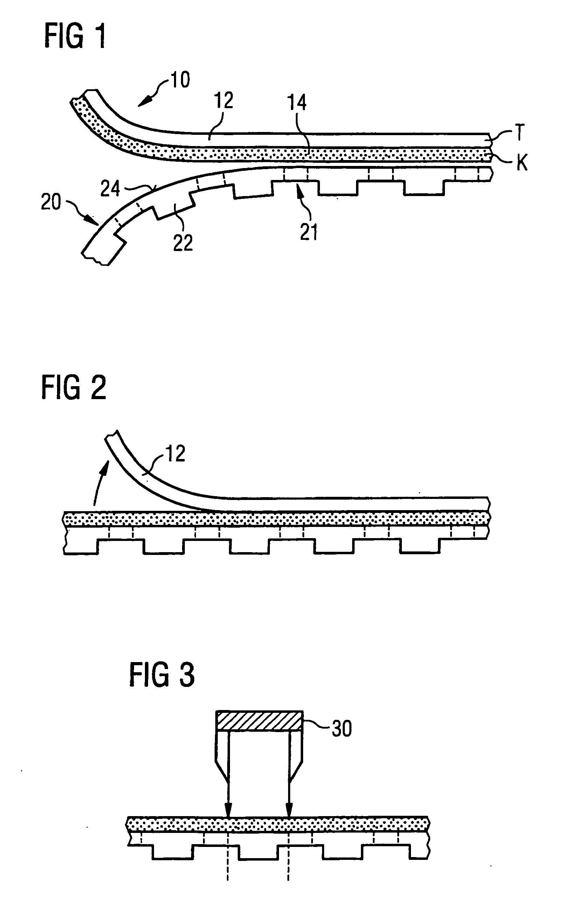

Das nachfolgend beschriebene Herstellungsverfahren gliedert sich grundsätzlich in eine Vorbereitungsphase, in der das Chipmodul sowie die weiteren Schichten und Bauelemente eines Datenträgerkörpers bereitgestellt werden und einen Laminierprozess, in dem die bereitgestellten Komponenten durch Laminieren, d.h. durch Anwendung von Druck und Wärme miteinander dauerhaft verbunden werden. Hergestellt wird ein mehrschichtiger, flacher tragbarer Kunststoff-Datenträgerkörper, der entweder als Inlay für einen gebrauchsfertigen Datenträger dient oder bereits ein fertiger Datenträger ist. Ein gebrauchsfertiger Datenträger dient z.B. als Identifikationsdokument, etwa als elektronischer Ausweis oder als elektronischer Paß. Fig. 1 zeigt den ersten Schritt der Vorbereitungsphase, in dem ein zweischichtiges Kleberband 10 und ein Modulträgerband 20 miteinander verbunden werden. Das Kleberband 10 besteht aus einer Handhabungsfolie 12 und einer Kleberschicht 14. Die Handhabungsfolie 12 haftet nur leicht an der Kleberschicht 14 und ist von dieser lösbar. Die Handhabungsfolie 14 erleichtert die Handhabung des Kleberbandes 10; sie ist entsprechend verzichtbar, wenn die Beschaffenheit der Kleberschicht 14 dies erlaubt oder geeignete Mittel zur Verfügung stehen, die eine direkte Handhabung der Kleberschicht 14 erlauben. Bei dem die Kleberschicht 14 bildenden Klebstoff handelt es sich vorzugsweise um einen Hotmelt-Kleber, der auf die Oberfläche des Modulträgerbandes 20 abgestimmt ist vor allem im Bereich der Chipmodule 22 an dieser haftet. Die Schmelztemperatur des Hotmelt-Klebers liegt zweckmäßig in einem Bereich von 100°C bis 150°C, vorzugsweise in einem Bereich von 110°C bis 120°C.

Die Oberfläche des Modulträgerbandes 20 ist häufig laminierunfreundlich, d.h. sie geht bei für das Laminieren von Karten üblichen Laminierbedingungen, unter denen sich die für die übliche Kartenherstellung zusammengelegten Kunststoffschichten verbinden, keine oder nur eine schlechte Verbindung zur nächsten anliegenden Kunststoffschicht ein. Der Erweichungspunkt der Oberfläche des Modulträgerbandes 20 liegt zumindest bereichsweise über der Temperatur, bei der die weiteren zum Aufbau eines Inlays bzw. eines Datenträgers eingesetzten Schichten beim Laminieren eine Verbindung eingehen.

Das Modulträgerband 20 trägt in einer oder mehreren Reihen angeordnete Chipmodule 22, die zweckmäßig direkt auf dem Modulträgerband 20 aufgebaut wurden, so dass die Oberflächen 24 der Chipmodule 22 Teil der dem Klebeband 10 zugewandten Oberfläche des Modulträgerbandes 20 sind. Die Chipmodule 22 besitzen typischerweise ein T-förmiges Profil mit einem breiten Kopfteil 26 mit der Oberfläche 24 und einem im Vergleich dazu schmaleren Fußteil 28 mit der Unterseite 29. Die Oberfläche 24 besitzt in der Regel eine merkliche Ausdehnung, die z.B. mehrere mm² betragen kann. Die Randkontur der Oberfläche 24 wird in der Regel fertigungsbedingt von einer scharfen - im Unterschied zu einer abgerundeten -, in einem m 90°-Winkel abfallenden Kante gebildet. Der Kopfteil 26 enthält typischerweise metallische Strukturen, die zum Beispiel als Leiterbahnen oder Kontaktflächen dienen. Die metallischen Strukturen sind insbesondere auch Teil der Oberfläche 24 des Kopfteils 26. Metallische Strukturen, die ebenfalls insbesondere als Leiterbahnen und/oder Kontaktflächen dienen, befinden sich ferner auch an den unterseitigen Schulterflächen 27 im Überstandsbereich des Kopfteiles 26. Sie dienen zur späteren elektrischen Verbindung des Chipmoduls 22 mit einer Spule, Antenne oder einer anderen Leiterstruktur.

In einer zweckmäßigen Fertigungstechnik basieren das Modulträgerband 20 und die darin ausgebildeten Chipmodule 22 auf der sogenannten Leadframe-Technik. Das Modulträgerband 20 wird hierbei von einem metallischen Band gebildet, in dem durch Einbringen von entsprechenden Ausnehmungsstrukturen ein Layout erzeugt ist. In einer alternativen Fertigungstechnik besteht das Modulträgerband 20 aus einem faserverstärkten Polymer, etwa einem sogenannten FR4-Material, das ein- oder beidseitig mit einem leitfähigen Material beschichtet sein kann, in dem ein Layout angelegt ist. Das leitfähige Material kann zum Beispiel eine Kupferfolie sein, auf die eine Nickel/Gold-Beschichtung aufgebracht ist.

Die einzelnen Chipmodule 22 sind in der Regel durch eine die Kontur umrandende Perforation oder Vorkerbung oder vergleichbare Solltrennungsstrukturen 21 aus dem Modulträgerband 20 vorgetrennt, so dass ein nachfolgendes endgültiges Auslösen vereinfacht ist. Der Fuß 28 des Chipmoduls 22 beinhaltet in der Regel einen oder mehrere ICs und wird typischerweise durch eine um den oder die ICs herum angelegte Kunststoffverkapselung gebildet. Die Verkapselung besteht aus einem hochschmelzenden Kunststoff, der beim nachfolgenden Laminieren nicht erweicht.

Kleberband 10 und Modulträgerband 20 werden zweckmäßig auf Rollen bereitgestellt und davon ausgehend für das Verbinden so zusammengeführt, dass die Kleberschicht 14 auf der Seite des Modulträgerbandes 20 zu liegen kommt, die die Oberflächen 24 der Kopfteile 26 der Chipmodule 22 enthält. Die Verbindung von Kleberband 10 und Modulträgerband 20 erfolgt unter Druck und einer auf die Kleberschicht 14 abgestimmten Temperatur, die den Klebstoff aktiviert.

Nach dem Verbinden von Klebeband 10 und Modulträgerband 20 wird, wie in Fig. 2 veranschaulicht, die Handhabungsfolie 12 von der Kleberschicht 14 entfernt.

Aus dem danach vorliegenden Verbund aus Modulträgerband 20 und Kleberschicht 14 werden nachfolgend, wie in Fig. 3 gezeigt, mit Hilfe eines Vereinzelungswerkzeuges 30 die einzelnen Chipmodule 22 herausgelöst. Das Vereinzelungswerkzeug 30 trennt dabei die Chipmodule 22 entlang der Solltrennungsstrukturen 21 oder, sofern solche nicht vorhanden sind, entlang der für den Kopfteil 26 definierten Umfangskontur. Zusammen mit dem Chipmodul 22 wird dabei eine Klebereinlage 16 aus dem Kleberband-Modulträgerband-Verbund herausgelöst, die die gesamte Oberfläche 24 des Kopfteiles 26 des Chipmoduls 22 bedeckt und deren Randkontur genau mit der Umfangskontur des Kopfteiles 26 fluchtet. Das Vereinzelungswerkzeug 30 kann, wie in Fig. 3 angedeutet, ein Stanz- oder Schneidwerkzeug sein. Ohne weiteres kann das Vereinzeln aber auch mittels Lasers, mittels Wasserstrahles oder mit anderen geeigneten Werkzeugen erfolgen.

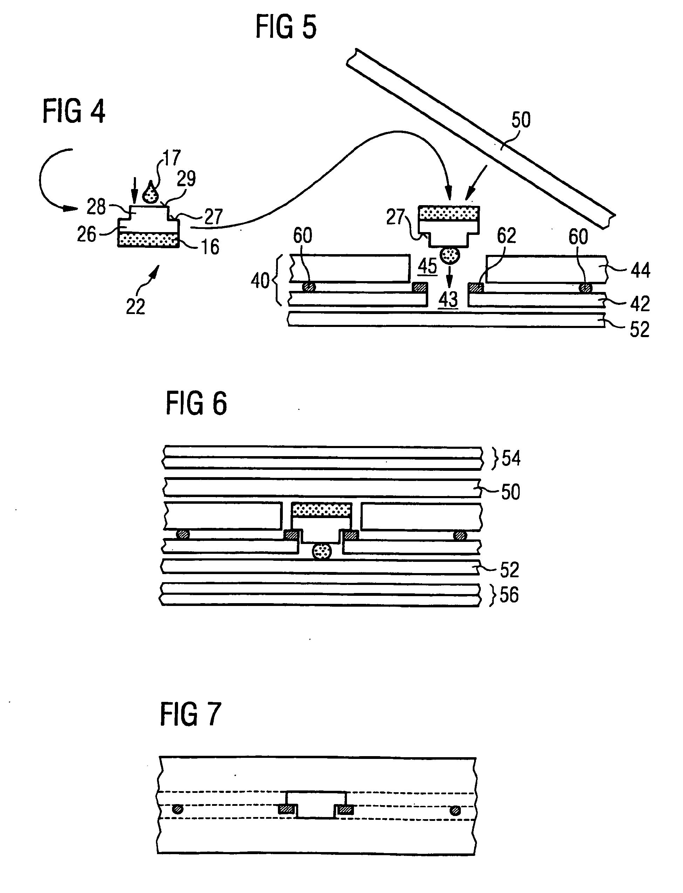

Auf die Unterseite 29 des vereinzelten und mit einer Klebereinlage 16 versehenen Chipmoduls 22 wird, wie in Fig. 4 gezeigt, im folgenden Schritt ein Haftkleber 17 aufgetragen. Zweckmäßig geschieht dieser Auftrag durch Dosieren eines flüssigen Klebstoffes. Als Klebstoff kommt hier ein üblicher Haftkleber zum Einsatz. Das danach vorliegende Chipmodul 22 trägt an seiner Oberfläche 24 eine mit deren Kontur übereinstimmende Klebereinlage 16 und an seiner Unterseite 29 einen Haftkleber 17.

Alternativ zur Aufbringung auf die Unterseite 29 des Chipmoduls 22 kann der Haftkleber 17 auch in die Ausnehmung 43 dosiert werden, in die das Chipmodul 22 nachfolgend eingesetzt wird.

Das Chipmodul 22 wird nachfolgend, wie in Fig. 5 veranschaulicht, in einen für das Laminieren vorbereiteten Schichtenstapel eingesetzt. Die Gesamthöhe des Schichtenstapels ist größer als die des Chipmoduls 22, so daß dieses vollständig in den Schichtenstapel aufgenommen werden kann, jedoch nicht so groß, daß die Höhe des Chipmoduls 22 dagegen vernachlässigt werden könnte; typischerweise beträgt die Höhe des Chipmoduls 22 zwischen 10% und 90% der Gesamthöhe des Schichtenstapels.

Der Schichtenstapel besteht aus einer mehrschichtigen Kernschicht 40 sowie jeweils mindestens einer oberen Deckschicht 50 und einer unteren Deckschicht 52. Die Deckschichten 50, 52 sind durchgehend, d.h. sie bedecken die gesamte Fläche des Datenträgerkörpers, bestehen aus einem üblichen geeigneten Kunststoff z.B. aus Polycarbonat (PC) und weisen jeweils eine Dicke von z.B. 30 µm auf. Im Ausführungsbeispiel besteht die Kernschicht 40 ihrerseits aus zwei Teilkernschichten 42, 44, wobei die erste Teilkernschicht 42 z.B. wiederum aus Polycarbonat (PC) besteht und eine Dicke von z.B. 105 µm aufweist und die zweite Teilkernschicht 44 z.B. ebenfalls aus Polycarbonat besteht und eine Dicke von z.B.150 µm aufweist. Die Dicken der Teilkernschichten 42, 44 sind dabei an das Chipmodul 22 angepaßt. Anstelle von Polycarbonat können die Teilkernschichten 42, 44 auch aus einem anderen üblichen Kunststoff bestehen. Die erste Teilkernschicht 42 weist weiter eine Ausnehmung 43 auf, die zweite Teilkernschicht 44 eine im Vergleich dazu breitere Ausnehmung 45. Beide Ausnehmungen 43, 45 zusammen formen zumindest näherungsweise ein Negativ der Außenkontur des mit der Klebereinlage 16 beschichteten Chipmoduls 22.

Auf der ersten Teilkernschicht 42, ist eine Spule 60 angeordnet. Sie kann als Drahtleiter oder gedruckte Leiterbahn ausgebildet oder auch geätzt sein. Die Spule 60 weist Anschlusskontakte 62 auf, die auf dem gegenüber der zweiten Teilkernschicht 44 vorspringenden Oberflächenbereichen angeordnet sind, so dass sie für eine spätere Kontaktierung offen zugänglich sind.

Zweckmäßig wird die untere Deckschicht 52, wie in Fig. 5 angedeutet, zusammen mit den Teilkernschichten 42, 44 und den Ausnehmungen 43, 45 bereitgestellt, so daß die Ausnehmungen 43, 45 eine nach unten abgeschlossene zweistufige Ausnehmung bilden. In die übereinander angeordneten Teilkernschichten 42,44 wird das Chipmodul 22 in die zweistufige Ausnehmung 43, 45 so eingesetzt, dass die Schultern 27 auf den Kontakten 62 der Spule 60 zu liegen kommen und die mit der Klebereinlage 16 versehene Moduloberfläche 24 zur oberen offenen Seite der Ausnehmung 43, 45 hin liegt. Die Oberfläche der Klebereinlage 16 auf dem Chipmodul 22 schließt dabei vorzugsweise bündig mit der Oberfläche der Teilkernschicht 44 ab bzw. ist so dimensioniert, daß sie jedenfalls nach dem nachfolgenden Laminieren bis auf zulässige Toleranzen, wie sie typischerweise durch einschlägige Normen oder Spezifikationen vorgegeben werden, mit der der Oberfläche der Teilkernschicht 44 fluchtet. Die Oberfläche der Klebereinlage 16 und die Oberfläche der Teilkernschicht 44 bilden damit zusammen eine durchgängig plane Fläche, auf der die obere Deckschicht 50 angeordnet wird. Die obere Deckschicht 50 ist dadurch entsprechend selbst völlig plan.

Alternativ kann das Einsetzen des Chipmoduls 22 auch zuerst erfolgen, bevor anschließend die entstandene Anordnung mit der oberen und der unteren Deckschicht 50, 52 abgedeckt wird. Es ist auch möglich, die Teilkernschichten 42, 44 und die untere Deckschicht 52 in einem vorbereitenden Laminierschritt miteinander zu verbinden, so dass die beiden Ausnehmungen 43, 45 eine gestufte zusammenhängende Ausnehmung bilden, in die das Chipmodul 22 eingesetzt wird. Anstelle zweier Teilkernschichten 42, 44 kann auch eine größere Zahl von Teilkernschichten vorgesehen sein. Ebenso ist es möglich, eine einzelne vorab gefertigte Kernschicht 40 einzusetzen, die Spule 60 und Anschlußkontakte 62 enthält und in die eine geeignete Ausnehmung 43,45 z.B. durch Fräsen eingebracht wurde. Beim Einsetzen des Chipmoduls 22 in die aus den Teilkernschichten 42, 44 und der unteren Deckschicht 52 gebildete Anordnung haftet das Modul 22 an seiner Unterseite 29 über den dort aufgebrachten Haftkleber 17 an der unteren Deckschicht 52.

Die danach vorliegende Anordnung kann ein Inlay für einen tragbaren Datenträger sein. Zur Vervollständigung eines tragbaren Datenträgers können auf eine solche Inlay-Anordnung weitere, äußere Deckschichten 54, 56 plaziert werden, die z.B. zur Personalisierung oder als dekorative oder schützende Abschlußschicht dienen. Die weiteren Deckschichten 54, 56 bestehen ebenfalls aus laminierbaren Kunststoffen wie PC, PET oder ähnliche. Die entstehende Datenträgeranordnung kann danach, wie in Fig. 6 gezeigt, z.B. aus insgesamt zehn Schichten bestehen, nämlich den beiden Teilkernschichten 42 und 44, der oberen und der unteren Deckschicht 50, 52 sowie jeweils drei weiteren oberen und unteren Deckschichten 54, 56. Die Deckschicht 50 kann bei Aufbringung weiterer Deckschichten 54, 56 auch entfallen, insbesondere dann, wenn das Laminieren in einem Schritt erfolgt und gleich ein fertiger Datenträger hergestellt wird.

Die so vorbereitete Anordnung wird schließlich laminiert. Der Laminierprozeß wird in an sich bekannter Weise ausgeführt, wie er etwa in dem eingangs erwähnten Buch "Vom Plastik zur Chipkarte" beschrieben ist. Die Oberfläche 24 des Chipmoduls 22kann dabei laminierunfreundlich sein und bei Laminierbedingungen, unter denen die Kernschicht 42, 44und die Deckschicht 50 eine gute Verbindung eingehen, keine oder nur eine schlechte Verbindung zu der nächsten anliegenden Deckschicht 50, 54 eingehen.

Es entsteht trotzdem ein guter Laminierverbund, der auch die Oberfläche 24 des Chipmoduls 22 einschließt. Beim Laminieren verbindet sich nämlich die auf der Oberfläche 24 des Chipmoduls 22 befindliche Klebereinlage 16 innig mit der darüberliegenden oberen Deckschicht 50. Besonderes diese innige Verbindung, die bei einem einfachen, direkten Laminieren der Oberfläche 24 und der oberen Deckschicht 50 nicht erreicht werden kann, bewirkt, dass die Anfälligkeit des entstehenden Inlays bzw. des resultierenden Datenträgers gegen das Entstehen von von dem Chipmodul 22 ausgehenden Rissen in den Deckschichten 50 bis 56 deutlich verringert wird.

Das Laminieren kann in einer zweckmäßigen Ausgestaltung in einem einzigen Laminierschritt erfolgen, in dem alle vorhandenen Schichten, also z.B. Schichten 42, 44, 50, 52, 54, 56 oder Schichten 42, 44, 50, 52 oder Schichten 42, 44, 52, 54 gemeinsam verbunden werden. Die Temperatur liegt dabei zweckmäßig zwischen 130 bis 180° C, bevorzugt bei 175°C bis 180°C. Es entsteht ein Datenträger, der wahlweise und je nach Schichtenfolge als Inlay verwendbar ist oder der z.B. bereits eine körperlich fertige Chipkarte bildet.

In einer ebenfalls zweckmäßigen Alternative erfolgt das Laminieren in zwei Schritten, wobei zunächst ein Inlay aus den Teilkernschichten 42, 44, unterer Deckschicht 50 und oberer Deckschicht 52 bei einer etwas niedrigeren Temperatur von z.B. 160° C bis 170°C oder, falls PVC verwendet wird, bei einer entsprechend noch weiter herabgesetzten Temperatur laminiert wird. Anschließend werden in einem zweiten Laminierschritt bei derselben Temperatur die weiteren Deckschichten 54, 56 zu einem fertigen Datenträger auflaminiert. In diesem Fall werden die weiteren Deckschichten 54, 56 erst aufgelegt, nachdem das Inlay laminiert wurde. Ohne weiteres können mehr als zwei Laminierschritte vorgesehen sein, in denen die oder weitere Schichten einzeln auflaminiert werden. Das mehrschrittige Laminieren ist etwas aufwendiger, erlaubt aber die Verwendung niedrigerer Temperaturen und schont entsprechend den im Chipmodul 22 enthaltenen IC.

Fig. 7 zeigt im Querschnitt den Chipmodulbereich eines fertigen Datenträgers, wie er aus einer in Fig. 6 gezeigten Anordnung nach dem Laminieren erhalten wird. Der Datenträger zeichnet sich dadurch aus, daß, wie durch die strichlierte Linie angedeutet, die von der Klebereinlage 16 gebildete Oberfläche und die Oberfläche der Kernschicht 42, 44 zur Deckschicht 50 und den folgenden Schichten 54 hin insgesamt bis auf zulässige Toleranzen, wie sie typischerweise etwa durch Normen oder in Spezifikationen für Datenträger werden, eine plane Oberfläche bilden. Der Datenträger besitzt dadurch an seiner von der Deckschicht 54 gebildeten Außenseite eine völlig plane Oberfläche. Die Verbindung zwischen der Kernschicht 44 bzw. der Klebereinlage 16 und der Deckschicht 50 ist dabei durchgängig gut. Ein solcher Datenträger kann beispielsweise ein berührungslos auslesbares Identifikationsdokument mit einem integrierten IC sein, das als selbständig als Ausweis dient oder das als Datenseite in ein Passbuch eingebunden wird.

Unter Beibehaltung des Grundgedankens, auf der an sich laminierunfreundlichen Oberfläche 24 eines Chipmoduls 22 vorbereitend vor dem Laminieren eine Klebereinlage 16 aufzubringen, um auf diese Weise eine innige Verbindung zwischen der Oberfläche 24 und der angrenzenden oberen Deckschicht 50 zu erreichen, gestattet die vorbeschriebene Erfindung eine Reihe von Ausgestaltungen. So können etwa die in den Fig. 6 und 7 gezeigten Schichtenstapel weitere Schichten aufweisen oder es können bei der Durchführung der beschriebenen Verfahrensschritte Zwischenschritte vorgesehen sein.

## Patentansprüche

1. Verfahren zum Herstellen eines Datenträgerkörpers mit einer Kernschicht und mindestens einer Deckschicht, wobei in der Kernschicht ein Chipmodul angeordnet ist und die Deckschicht eine durchgehende Schicht ist, mit den Schritten:
- Bereitstellen eines Chipmoduls (22)
- Aufbringen einer Klebereinlage (16) auf die Oberfläche (24) des Chipmoduls (22),
- Anlegen einer Ausnehmung (43, 45) in der Kernschicht (42, 44)
- Einsetzen des Chipmoduls (22) in die Ausnehmung (43, 45), so daß die mit der Klebereinlage (16) versehene Chipmoduloberfläche (24) zur offenen Seite der Ausnehmung (43, 45) hin liegt,
- Aufbringen der mindestens einen Deckschicht (50, 54) über die Moduloberfläche (24),
- Laminieren der danach vorliegenden Anordnung (16, 22, 42, 44, 50).

2. Verfahren nach Anspruch 1, **dadurch gekennzeichnet, daß**, der Erweichungspunkt der Chipmoduloberfläche (24) zumindest bereichsweise über der Temperatur liegt, bei der die Kernschicht (42,44) und die Deckschicht (50, 54) beim Laminieren eine Verbindung eingehen.

3. Verfahren nach Anspruch 1, **dadurch gekennzeichnet, dass** die Klebereinlage (16) passergenau abgestimmt auf die Chipmoduloberfläche (24) aufgebracht wird.

4. Verfahren nach Anspruch 1, **dadurch gekennzeichnet, dass** als Klebstoff für die Klebereinlage (16) ein heißschmelzender Kleber verwendet wird.

5. Verfahren nach Anspruch 1, **dadurch gekennzeichnet, dass** der Kleber in Form eines aus einer Trägerschicht (12) und einer Kleberschicht (14) bestehenden Kleberbandes (10) bereitgestellt wird, wobei die Trägerschicht (12) nach Aufbringen auf die Chipmoduloberfläche (24) wieder entfernt wird.

6. Verfahren nach Anspruch 1, dadurch gekenntzeichnet, dass das Chipmodul (22) in einem Modulträgerband (20) bereitgestellt wird, wobei die Chipmoduloberfläche (24) Teil des Modulträgerbandes (20) ist.

7. Verfahren nach Anspruch 1, **dadurch gekennzeichnet, dass** das Kleberband (10) auf das Modulträgerband (20) aufgebracht wird und nachfolgend die Chipmodule (22) jeweils zusammen mit einem Teil (16) der Kleberschicht (14) aus dem Modulträgerband (20) gelöst werden.

8. Verfahren nach Anspruch 1, **dadurch gekennzeichnet, dass** auf die Modulunterseite (29) vor dem Einsetzen in die Ausnehmung ein Haftkleber (17) aufdosiert wird.

9. Datenträgerkörper bestehend aus mindestens einer Kernschicht (42, 44) und mindestens einer Deckschicht (50), wobei in der Kernschicht (42, 44) ein Chipmodul (22) angeordnet ist und die Deckschicht (50) eine durchgehende Schicht ist und wobei Kernschicht (42, 44) und Deckschicht (50) durch Laminieren miteinander verbunden sind, **dadurch gekennzeichnet, dass** die Kernschicht (42, 44) im Bereich der Oberfläche (24) des Chipmoduls (22) unterbrochen ist und die Chipmoduloberfläche (24) vollständig durch eine Klebereinlage (16) bedeckt ist, die innig mit der Chipmoduloberfläche (24) und der Deckschicht (50) verbunden ist, wobei Kleberschicht (16) und Kernschicht (42, 44) bis auf geringe Unterschiede zusammen eine durchgängig plane Fläche bilden, auf der die Deckschicht (50) angeordnet ist.

10. Datenträgerkörper nach Anspruch 9, **dadurch gekennzeichnet, dass** die Chipmoduloberfläche (24) metallisch oder laminier unfreundlich antihaftend ist.

## Claims

1. A method for manufacturing a data carrier body having a core layer and at least one cover layer, wherein in the core layer there is arranged a chip module and the cover layer is a continuous layer, with the steps:
- making available a chip module (22),
- applying an adhesive insert (16) on the surface (24) of the chip module (22),
- creating a recess (43, 45) in the core layer (42, 44),
- inserting the chip module (22) in the recess (43, 45), so that the chip module surface (24) provided with the adhesive insert (16) lies towards the open side of the recess (43, 45),
- applying the at least one cover layer (50, 54) over the module surface (24),
- laminating the thereafter existing arrangement (16, 22, 42, 44, 50).

2. The method according to claim 1, **characterized in that** the softening point of the chip module surface (24) lies at least in certain regions above the temperature at which the core layer (42, 44) and the cover layer (50, 54) enter into a connection upon lamination.

3. The method according to claim 1, **characterized in that** the adhesive insert (16) is applied so as to be coordinated in exact register with the chip module surface (24).

4. The method according to claim 1, **characterized in that** as an adhesive for the adhesive insert (16) a hot-melting adhesive is employed.

5. The method according to claim 1, **characterized in that** the adhesive is made available in the form of an adhesive band (10) consisting of a carrier layer (12) and an adhesive layer (14), the carrier layer (12) being removed after application on the chip module surface (24).

6. The method according to claim 1, **characterized in that** the chip module (22) is made available in a module carrier band (20), the chip module surface (24) being part of the module carrier band (20).

7. The method according to claim 1, **characterized in that** the adhesive band (10) is applied on the module carrier band (20) and subsequently the chip modules (22) are detached, respectively together with a part (16) of the adhesive layer (14), from the module carrier band (20).

8. The method according to claim 1, **characterized in that** onto the module underside (29) there is metered a contact adhesive (17) before the insertion in the recess.

9. A data carrier body consisting of at least one core layer (42, 44) and at least one cover layer (50), wherein in the core layer (42, 44) there is arranged a chip module (22) and the cover layer (50) is a continuous layer, and wherein core layer (42, 44) and cover layer (50) are connected to each other by lamination, **characterized in that** the core layer (42, 44) in the region of the surface (24) of the chip module (22) is interrupted and the chip module surface (24) is completely covered by an adhesive insert (16) which is intimately connected with the chip module surface (24) and the cover layer (50), adhesive layer (16) and core layer (42, 44) together forming a consistently planar area, except for small allowable differences, on which the cover layer (50) is arranged.

10. The data carrier body according to claim 9 **characterized in that** the chip module surface (24) is metallic or non-sticking in a fashion adverse to lamination.

## Revendications

1. Procédé de fabrication d'un corps de support de données comprenant une couche noyau et au moins une couche de recouvrement, un module puce étant agencé dans la couche noyau et la couche de recouvrement étant une couche continue, comprenant les étapes:
- mise à disposition d'un module puce (22),
- application d'un apport d'adhésif (16) sur la surface (24) du module puce (22),
- génération d'un évidement (43, 45) dans la couche noyau (42, 44),
- insertion du module puce (22) dans l'évidement (43, 45) de telle manière que la surface (24) du module puce pourvue de l'apport d'adhésif (16) est tournée vers le côté ouvert de l'évidement (43, 45),
- application de la au moins une couche de recouvrement (50, 54) sur la surface (24) du module,
- laminage de l'agencement ainsi obtenu (16, 22, 42, 44, 50).

2. Procédé selon la revendication 1, **caractérisé en ce que** le point de ramollissement de la surface (24) du module puce se situe, au moins par zones, au-dessus de la température à laquelle la couche noyau (42, 44) et la couche de recouvrement (50, 54) entrent en liaison lors du laminage.

3. Procédé selon la revendication 1, **caractérisé en ce que** l'apport d'adhésif (16) est appliqué en parfait repérage sur la surface (24) du module puce .

4. Procédé selon la revendication 1, **caractérisé en ce que**, en tant que colle pour l'apport d'adhésif (16), c'est une colle thermofusible qui est utilisée.

5. Procédé selon la revendication 1, **caractérisé en ce que** l'adhésif est mis à disposition sous forme d'un ruban d'adhésif (10) composé d'une couche support (12) et d'une couche d'adhésif (14), la couche support (12) étant à nouveau enlevée après application sur la surface (24) du module puce .

6. Procédé selon la revendication 1, **caractérisé en ce que** le module puce (22) est mis à disposition dans une bande support pour modules (20), la surface (24) du module puce étant une partie de la bande support pour modules (20).

7. Procédé selon la revendication 1, **caractérisé en ce que** le ruban d'adhésif (10) est appliqué sur la bande support pour modules (20) et les modules puces (22) sont ensuite, respectivement avec une partie (16) de la couche d'adhésif (14), détachés de la bande support pour modules (20).

8. Procédé selon la revendication 1, **caractérisé en ce que**, avant l'insertion dans l'évidement, un adhésif de contact (17) est appliqué par dosage sur la face de dessous (29) du module.

9. Corps de support de données consistant en au moins une couche noyau (42, 44) et au moins une couche de recouvrement (50), un module puce (22) étant agencé dans la couche noyau (42, 44) et la couche de recouvrement (50) étant une couche continue, et la couche noyau (42, 44) et la couche de recouvrement (50) étant liées entre elles par laminage, **caractérisé en ce que** la couche noyau (42, 44) est interrompue dans la zone de la surface (24) du module puce (22) et **en ce que** la surface (24) du module puce est entièrement recouverte d'un apport d'adhésif (16) qui est intimement lié à la surface (24) du module puce et à la couche de recouvrement (50), la couche d'adhésif (16) et la couche noyau (42, 44) formant conjointement, à l'exception de faibles différences, une superficie continue plane sur laquelle la couche de recouvrement (50) est agencée.

10. Corps de support de données selon la revendication 9, **caractérisé en ce que** la surface (24) du module puce est métallique ou anti-adhérente de façon impropre au laminage.
